# EUROPEAN PATENT SPECIFICATION

(11) **EP 2 938 892 B1**
(45) Date of publication and mention of the grant of the patent: **22.02.2017**
(21) Application number: 13811365.9
(22) Date of filing: 19.12.2013
(51) Int. Cl.: F16B 37/04

(54) **AN ASSEMBLY SYSTEM AND A WIND TURBINE INCLUDING THE ASSEMBLY SYSTEM**
MONTAGESYSTEM UND WINDTURBINE MIT DEM MONTAGESYSTEM
SYSTÈME D'ASSEMBLAGE ET ÉOLIENNE COMPRENANT CE SYSTÈME D'ASSEMBLAGE

(30) Priority: 28.12.2012 DK 201270829
(43) Date of publication of application: 04.11.2015
(73) Proprietor: Vestas Wind Systems A/S, 8200 Aarhus N (DK)
(72) Inventor: WILLIE, Etekamba Okon, DK-8381 Tilst (DK)
(74) Representative: Vestas Patents Department
(86) International application number: PCT/DK2013/050448
(87) International publication number: WO 2014/101919

(56) References cited:
- US-A1- 2012 308 328
- US-A1- 2012 328 389

## Description

The invention relates to an assembly system for assembling two components. More specifically, the invention relates to an assembly system for retaining an assembly element such as a bolt or a rivet etc. The assembly system to which the invention relates comprises a structural element with a rail, e.g. a C-shaped rail. The rail forms an elongated slot between opposite edges extending in parallel at a distance. A retaining element is movable within the rail and adapted to receive and retain the assembly element. The invention further relates to a wind turbine with a nacelle including such an assembly system.

### BACKGROUND OF THE INVENTION

Mounting rails are known in the art. They are typically used for attaching panels or other items to a rigid frame, e.g. for making machine foundations, cabinets for electrical equipment, or in similar assembly tasks. Typically, sliding structures are movable in the rails and offer an easy attachment of an element to the rail. The rail is often C-shaped such that the sliding structure becomes caught behind the opposite free edges of the C-shape. Such known systems offer flexibility since the retaining element is movable in the rail and thereby provides an opportunity to select the location of the assembly element freely along the rail.

Today, the nacelle housing in a wind turbine is typically made from large flat, and typically bendable panels of a composite material. The panels are joined by structural members which provide bending moment in different directions and generally provides the structural integrity of the nacelle housing. Typically, the structural members extend along all edges from corner to corner of the nacelle housing.

Assembly systems of various kinds are used in wind turbines, e.g. the above mentioned mounting rails. Typically they included extruded profiles with elongated rails and T-shaped nuts which can slide in the rails.

Typically, it is awkward if not impossible to position a T-shaped nut precisely in the track and to catch the T-shaped nuts with a cooperating bolt unless simultaneous access is facilitated on both sides of two elements being joined. Particularly, the known systems are unsuitable for assembly of very large construction or for assembly of constructions where access is limited to one side of the two elements being joined. In a wind turbine, the existing systems fails because attachment of the very large panels from the outside of the nacelle has to be carried out without simultaneous access to the structural members inside the nacelle, and it is therefore impossible to correctly position traditional nuts relative to the bolts.

US2012/0328389 discloses a tool with a body which is inserted in a C-shaped steel profile and holds a nut. The body forms locking claws preventing the base from coming out of the C-shaped profile once it is inserted therein.

### DESCRIPTION OF THE INVENTION

It is an object of embodiments of the invention to improve the existing assembly systems, and particularly, to enable an easier insertion of the assembly element in the retaining element, and particularly to enable use of the assembly system in large constructions and to enable use of the assembly system in constructions with access from only one side of the construction.

Accordingly, the invention, in a first aspect, provides an assembly system specified in claim 1.

In a second aspect, the invention provides a wind turbine with a nacelle comprising panels joined to a frame, where the frame comprises an assembly system according to any of the preceding claims and where the panels are held by assembly elements received and retained in the retaining elements.

Since movement of the retaining element relative to the structural element is prevented by the locking elements, the use of the locking element facilitates an easier insertion of the assembly element in the retaining element. Particularly, the user may slide the retaining element in the C-shaped rail until a desired position is reached. At that point, the user may insert the locking element in the slot between the opposite edges and thereby fix the position of the retaining element in the rail.

The assembly element may e.g. be a screw or bolt or any similar kind of threaded assembly element known in the art or it may be a rivet, a nail, or generally any similar kind of non-threaded assembly element known in the art.

The rail may be C-shaped. By C-shape is herein meant any kind of shape forming an elongate internal space, and by which an element can be caught behind opposite edges which form a slot into the space.

The opposite edges may have any size and shape and they may extend continuously along the length of the structural element, or discontinuously along the length of the structural element. As an example, the slot may form a sequence of different sections having different distances between the edges. The edges may particularly be parallel.

The retaining element may be an element into which the assembly element may penetrate. It may be solid and allow penetration of a sharp pointed assembly element such as a screw or nail, or it may include one or more holes for receiving an assembly element with a blunt tip, e.g. a rivet or a bolt.

The locking element may be adapted for simultaneous engagement with a retaining element in the rail and with the structural element. In one example, the locking element forms part of the retaining element such that at least one locking element is always ready at hand for each retaining element. By *"forms part of"* is herein meant that the locking element and retaining element are molded in one piece or that they are solidly assembled from different components by gluing or welding etc. In another example, the locking element is a separate element which is attachable to the retaining element and which locks the position in the rail.

The locking element may particularly fix the position in the rail by friction. For that purpose, the locking element may have outer surfaces at a distance which compliments the distance between the opposite edges to thereby enable the surfaces of the locking element to become pressed against the opposite edges. For that purpose, at least one of the opposite edges and/or at least one of the outer surfaces may be elastically deformable such that the locking element may be inserted in the slot upon elastic deformation of the deformable part and whereby that elastic deformation introduces a pressure between the surfaces and the edges and thereby frictional engagement between opposite outer surfaces of the locking element and the opposite edges. In one embodiment, the entire locking element is elastically deformable, e.g. made from a plastic material, or the outer surfaces comprises protrusions having an elastically deformable character.

If the locking element forms part of the retaining element, the locking element may be movable relative to the retaining element so that the locking element can be moved into the slot while the retaining element is in the rail. For that purpose, a hinge may form the transition between the locking element and the retaining element. The hinge may e.g. be formed by a bendable strap like element which provides the ability to move the locking element relative to the retaining element.

In one embodiment, e.g. for the purpose of creating a stronger fixation of the retaining element in the rail or for providing symmetry, at least two locking elements are provided for each retaining element. The retaining element may e.g. be an elongated element extending between opposite free ends which points in opposite directions of the rail when the retaining element is positioned therein. In this embodiment, one locking element may be arranged at each of the opposite free ends.

The retaining element may comprise a threaded portion for receiving and retaining a matching threaded portion of the assembly element. In this case the assembly element could be a bolt, and the retaining element may form a hole with an internal threading like a nut. Particularly, the threaded portion may be formed as a separate nut-component having a hole with internal threading and made e.g. of a metal material such as a steel or aluminum alloy. The nut-component may be arranged in a body e.g. of an electrically non-conductive material, e.g. plastic material such as nylon, pvc, PU, PE or any similar kind of plastic material or made from a fiber material. The electrically non-conductive material may provide electrical isolation between the components and thereby prevent galvanic corrosion.

The body may include a portion which deforms elastically during insertion of the assembly element in the nut-component and thereby provide a locking action. In this way, the body may provide a larger frictional resistance against movement of the threaded portion relative to the retainer than the nut-component. This may be provided e.g. by a body of nylon having a hole which is coaxial with the hole of the nut-component, however having a diameter which is smaller than the diameter of the hole in the nut-component such that the assembly element becomes receivable upon elastic deformation of the body. This feature may thus provide a lock nut effect thereby resisting loosening of the assembly element in the retaining element under vibrations and torque.

The nut-component may be arranged between the structural element and the body such that the nut-component becomes pressed directly against the structural element in use. This may facilitate a stronger fixation e.g. when the assembly element is a bolt by which the nut-component is pressed against the structural element by tension in the bolt. To provide electrical isolation between the nut-component and the structural element, e.g. for reducing galvanic corrosion, the assembly system may further comprise an isolation element made from an electrically non-conductive material and arranged between the retaining element and the structural element.

In an alternative embodiment, the body may be arranged between the nut-component and the structural element such that the body becomes pressed directly against the structural element whereby the body can isolate the nut-component electrically from the structural element.

The retaining element may comprise a passage extending between a top opening and a bottom opening for receiving the assembly element. As aforementioned, the assembly element may be constituted by a threaded element like a screw or a bolt, and in that case, the hole may include an internal threading structure for receiving such an assembly element.

The retaining element may comprise a recess circumferentially about the top opening and being receivable in a hole in the structural element to thereby provide tactile indication when the retaining element becomes aligned with the hole. This will allow the user to position the retaining element relative to the structural element.

### LIST OF DRAWINGS

In the following, embodiments of the invention will be described by way of example with reference to the figures in which:
Fig. 1 illustrates an assembly system according to the invention;
Figs. 2 and 3 illustrate two locking elements in one part with a retaining element;
Fig. 4 illustrates an enlarged view of a locking element;
Fig. 5 illustrates an embodiment of a retaining element; and
Fig. 6 illustrates a retaining element in a rail and with one locking element inserted in the slot.

### DETAILED DESCRIPTION

Further scope of applicability of the present invention will become apparent from the following detailed description and specific examples. However, it should be understood that the detailed description and specific examples, while indicating preferred embodiments of the invention, are given by way of illustration only, since various changes and modifications within the scope of the invention will become apparent to those skilled in the art from this detailed description.

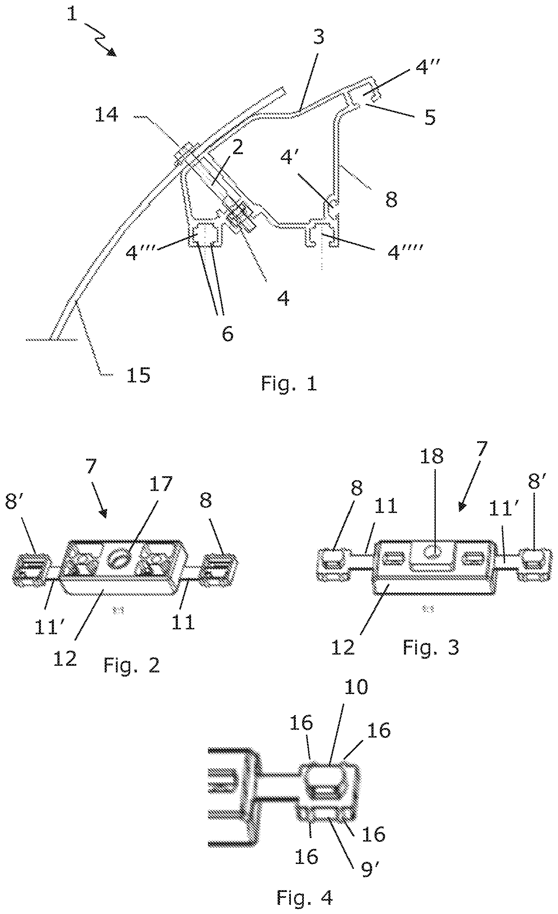

Fig 1 illustrates an assembly system 1 for retaining an assembly element 2. The assembly system comprises a structural element 3 formed by an elongated extruded profile with a number of rails 4, 4', 4", 4"', 4"". In the disclosed embodiment, the rails are C-shaped. Each C-shaped rail forms an elongated slot 5 between opposite edges 6. In Fig. 1, the elongated slot is only marked with numeral 5 at one of the illustrated 5 rails and the edges are only marked with numeral 6 at one of the illustrated 5 rails.

Figs. 2 and 3 illustrate in a top and a bottom view, a retaining element 7 which can be inserted into the rail and which is movable therein. Fig. 2 further illustrates two locking elements 8, 8' which can be inserted in the slot 5 to prevent movement of the retaining element 7 relative to the structural element 3. The locking elements 8, 8' are formed in one part with the retaining element 7. The bendable transitions 11, 11' join the locking elements 8, 8' and the retaining element 7 and allow the locking elements to be moved relative to the retaining element 7.

Fig. 4 illustrates one of the locking elements 8 in an enlarged view. In this view, it can be seen that the locking element has opposite outer surfaces 9, 9'. The opposite outer surfaces comprise elastically deformable projections 16. The distance between the outer surfaces 9, 9' is provided such that it matches the distance between the opposite edges 6 of the slot 5 into the rail 4. In use, the locking element is inserted between the opposite edges 6 during elastic deformation of the opposite surfaces 9, 9'. When inserted, the surfaces flexes outwards towards the edges and the locking element and thus the retaining element becomes locked in position in the rail due to friction between the opposite surfaces 9, 9' and the opposite edges 6.

As best seen in Figs. 2 and 3, the retaining element 7 comprises body 12 with a through-hole-passage extending between a top opening 17 and a bottom opening 18. In use, the assembly element is typically received through the top opening 17 so that it extends at least partly through the through-hole-passage and optionally exits through the bottom opening 18.

A nut-component (not shown) with an internally threaded hole can be arranged in the top opening such that the internally thread hole becomes coaxial with the through hole-passage. When a bolt which is received in the nut-component continues into the bottom opening 18, the smaller diameter of the bottom opening may provide a lock nut effect. By selecting the diameter of the bottom opening sufficiently small for the bolt only to be receivable upon elastic deformation of the bottom opening, a large frictional resistance may be obtained between the edge of the bottom opening and the bolt. In that way the retaining element may form a lock-nut feature.

Referring again to Fig. 1, the illustrated embodiment includes an assembly element 2 in the form of a bolt with a head 14 which arrests against an outer surface of a panel 15.

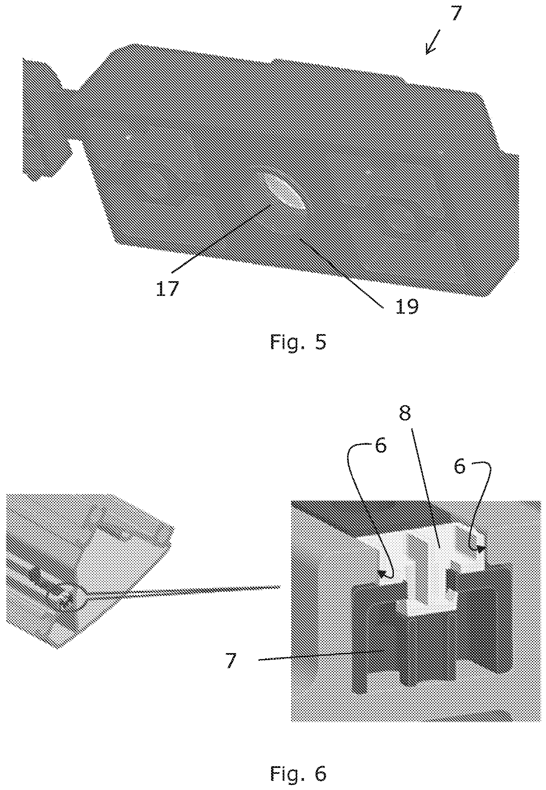

Fig. 5 illustrates an embodiment of the retaining element 7 including a recess 19 circumferentially about the top opening 17. During sliding of the retaining element 7 in the rail, the recess provides tactile indication when the retaining element becomes aligned with a hole in the structural element and thereby indicates the correct position of the retaining element 7 where the assembly element can be inserted through an opening in the structural element and into the retaining element.

Fig. 6 illustrates in a cross-section a retaining element 7 inserted in a rail and with the locking element 8 inserted in the slot and engaging the opposite edges 6 of the slot. In this position of the locking element, the locking element prevents free movement of the retaining element in the rail.

## Claims

1. An assembly system (1) for retaining an assembly element (2), the assembly system comprising a structural element (3) with a rail (4) forming an elongated slot (5) between opposite edges (6) extending in parallel at a distance, and a retaining element (7) movable within the rail and adapted to receive and retain the assembly element (2), wherein the system further comprises a locking element (8) which can be inserted in the slot (5) to prevent movement of the retaining element (7) relative to the structural element (3), the assembly system comprising a bendable transition (11) between the locking element (8) and the retaining element (7).

2. An assembly system according to claim 1, where the locking element (8) is adapted for simultaneous engagement with a retaining element in the rail and with the structural element (3).

3. An assembly system according to any of the preceding claims, wherein the locking element (8) has opposite outer surfaces (9) at a distance which compliments the distance between the opposite edges (6) to obtain frictional engagement between opposite outer surfaces (9, 10) of the locking element and the opposite edges.

4. An assembly system according to any of the preceding claims, wherein the locking element (8) forms part of the retaining element (7).

5. An assembly system according to any of the preceding claims, comprising at least two locking elements (8) for each retaining element (7).

6. An assembly system according to any of the preceding claims, wherein the retaining element (7) comprises a threaded portion for receiving and retaining a matching threaded portion of the assembly element.

7. An assembly system according to claim 6, wherein the threaded portion is formed as a separate nut-component (10) of a metal material arranged in a body (12) of an electrically non-conductive material.

8. An assembly system according to claim 7, where the body (12) provides a larger frictional resistance against movement of the threaded portion relative to the retainer than the nut-component (10).

9. An assembly system according to any of claims 7-8, where the nut-component (10) is between the structural element (3) and the body (12).

10. An assembly system according to any of the preceding claims, further comprising an isolation element (13) made from an electrically non-conductive material and arranged between the retaining element (7) and the structural element (3).

11. An assembly system according to any of the preceding claims, where the retaining element (7) comprises a passage extending between a top opening (17) and a bottom opening (18) for receiving the assembly element (2).

12. An assembly system according to claim 11, where the retaining element (7) comprises a recess (19) circumferentially about the top opening (17), the recess being receivable in a complementary hole in the structural element (3) to thereby provide tactile indication when the retaining element becomes aligned with the hole.

13. A wind turbine with a nacelle comprising panels joined to a frame, where the frame comprises an assembly system according to any of the preceding claims and where the panels are held by assembly elements received and retained in the retaining elements.

## Patentansprüche

1. Ein Zusammenbausystem (1) zum Halten eines Zusammenbauelements (2), welches Zusammenbausystem ein strukturelles Element (3) mit einer Schiene (4), die einen länglichen Schlitz (5) zwischen gegenüberliegenden Kanten (6) bildet, welche sich in einem Abstand parallel erstrecken, und ein Halteelement (7), das innerhalb der Schiene bewegbar und angepasst ist, um das Zusammenbauelement (2) aufzunehmen und zu halten, aufweist, wobei das System ferner ein Verriegelungselement (8) aufweist, das in den Schlitz (5) eingesetzt werden kann, um Bewegungen des Halteelements (7) relativ zu dem strukturellen Element (3) zu verhindern, welches Zusammenbausystem einen biegbaren Übergang (11) zwischen dem Verriegelungselement (8) und dem Halteelement (7) aufweist.

2. Ein Zusammenbausystem nach Anspruch 1, wobei das Verriegelungselement (8) für den simultanen Eingriff mit einem Halteelement in der Schiene und mit dem strukturellen Element (3) angepasst ist.

3. Ein Zusammenbausystem nach einem der voranstehenden Ansprüche, wobei das Verriegelungselement (8) gegenüberliegende äußere Flächen (9) in einem Abstand hat, der den Abstand zwischen den gegenüberliegenden Kanten (6) komplimentiert, um Reibeingriff zwischen den gegenüberliegenden äußeren Flächen (9, 10) des Verriegelungselements und den gegenüberliegenden Kanten zu erhalten.

4. Ein Zusammenbausystem nach einem der voranstehenden Ansprüche, wobei das Verriegelungselement (8) einen Teil des Halteelements (7) bildet.

5. Ein Zusammenbausystem nach einem der voranstehenden Ansprüche, aufweisend mindestens zwei Verriegelungselemente (8) für jedes Halteelement (7).

6. Ein Zusammenbausystem nach einem der voranstehenden Ansprüche, wobei das Halteelement (7) einen Gewindebereich zum Aufnehmen und Halten eines passenden Gewindebereichs des Zusammenbauelements aufweist.

7. Ein Zusammenbausystem nach Anspruch 6, wobei der Gewindebereich als eine separate Mutterkomponente (10) aus einem Metallmaterial gebildet ist, das in einem Körper (12) eines elektrisch nicht leitenden Materials angeordnet ist.

8. Ein Zusammenbausystem nach Anspruch 7, wobei der Körper (12) einen größeren Reibwiderstand gegen Bewegungen des Gewindebereichs relativ zu dem Halter als die Mutterkomponente (10) bereitstellt.

9. Ein Zusammenbausystem nach einem der Ansprüche 7-8, wobei die Mutterkomponente (10) zwischen dem strukturellen Element (3) und dem Körper (12) ist.

10. Ein Zusammenbausystem nach einem der voranstehenden Ansprüche, ferner aufweisend ein Isolierelement (13), das aus einem elektrisch nicht leitenden Material hergestellt und zwischen dem Halteelement (7) und dem strukturellen Element (3) angeordnet ist.

11. Ein Zusammenbausystem nach einem der voranstehenden Ansprüche, wobei das Halteelement (7) einen Durchgang für die Aufnahme des Zusammenbauelements (2) aufweist, der sich zwischen einer oberen Öffnung (17) und einer unteren Öffnung (18) erstreckt.

12. Ein Zusammenbausystem nach Anspruch 11, wobei das Halteelement (7) umfänglich um die obere Öffnung (17) eine Vertiefung (19) aufweist, welche Vertiefung in einem entsprechenden Loch in dem strukturellen Element (3) aufnehmbar ist, um dadurch eine fühlbare Angabe bereitzustellen, wenn das Halteelement mit dem Loch ausgerichtet wird.

13. Eine Windturbine mit einer Gondel, die an einen Rahmen gefügte Platten aufweist, wobei der Rahmen ein Zusammenbausystem nach einem der voranstehenden Ansprüche aufweist und wobei die Platten von dem Zusammenbauelementen getragen werden, die in den Halteelementen aufgenommen und gehalten sind.

## Revendications

1. Système d'assemblage (1) pour retenir un élément d'assemblage (2), le système d'assemblage comprenant un élément structurel (3) avec un rail (4) formant une fente allongée (5) entre des bords opposés (6) s'étendant en parallèle à une distance, et un élément de retenue (7) mobile à l'intérieur du rail et adapté pour recevoir et retenir l'élément d'assemblage (2), dans lequel le système comprend en outre un élément de blocage (8) qui peut être inséré dans la fente (5) pour empêcher le mouvement de l'élément de retenue (7) par rapport à l'élément structurel (3), le système d'assemblage comprenant une transition pliable (11) entre l'élément de blocage (8) et l'élément de retenue (7).

2. Système d'assemblage selon la revendication 1, où l'élément de blocage (8) est adapté pour une mise en prise simultanée avec un élément de retenue dans le rail et avec l'élément structurel (3).

3. Système d'assemblage selon l'une quelconque des revendications précédentes, dans lequel l'élément de blocage (8) a des surfaces extérieures opposées (9) à une distance qui complimente la distance entre les bords opposés (6) pour obtenir une mise en prise par friction entre des surfaces extérieures opposées (9, 10) de l'élément de blocage et les bords opposés.

4. Système d'assemblage selon l'une quelconque des revendications précédentes, dans lequel l'élément de blocage (8) fait partie de l'élément de retenue (7).

5. Système d'assemblage selon l'une quelconque des revendications précédentes, comprenant au moins deux éléments de blocage (8) pour chaque élément de retenue (7).

6. Système d'assemblage selon l'une quelconque des revendications précédentes, dans lequel l'élément de retenue (7) comprend une portion filetée pour la réception et la retenue d'une portion filetée correspondante de l'élément d'assemblage.

7. Système d'assemblage selon la revendication 6, dans lequel la portion filetée est réalisée sous la forme d'un composant écrou séparé (10) en un matériau métallique agencé dans un corps (12) en un matériau électriquement non conducteur.

8. Système d'assemblage selon la revendication 7, où le corps (12) fournit une plus grande résistance frictionnelle contre le mouvement de la portion filetée par rapport au dispositif de retenue que le composant écrou (10).

9. Système d'assemblage selon l'une quelconque des revendications 7-8, où le composant écrou (10) est entre l'élément structurel (3) et le corps (12).

10. Système d'assemblage selon l'une quelconque des revendications précédentes, comprenant en outre un élément d'isolation (13) réalisé à partir d'un matériau électriquement non conducteur et agencé entre l'élément de retenue (7) et l'élément structurel (3).

11. Système d'assemblage selon l'une quelconque des revendications précédentes, où l'élément de retenue (7) comprend un passage s'étendant entre une ouverture supérieure (17) et une ouverture inférieure (18) pour la réception de l'élément d'assemblage (2).

12. Système d'assemblage selon la revendication 11, où l'élément de retenue (7) comprend un évidement (19) circonférentiellement autour de l'ouverture supérieure (17), l'évidement pouvant être reçu dans un trou complémentaire dans l'élément structurel (3) pour fournir ainsi une indication tactile lorsque l'élément de retenue est aligné avec le trou.

13. Éolienne avec une nacelle comprenant des panneaux reliés à un châssis, où le châssis comprend un système d'assemblage selon l'une quelconque des revendications précédentes et où les panneaux sont maintenus par des éléments d'assemblage reçus et retenus par les éléments de retenue.
